# EUROPÄISCHE PATENTSCHRIFT

(11) **EP 3 222 864 B1**
(45) Veröffentlichungstag und Bekanntmachung des Hinweises auf die Patenterteilung: **10.04.2019**
(21) Anmeldenummer: 17157121.9
(22) Anmeldetag: 21.02.2017
(51) Int. Cl.: B23D 55/08, F16C 19/50, F16C 19/16, B26D 1/54, F16C 13/04, B26D 1/46

(54) **MESSERDREHEINRICHTUNG**
BLADE ROTATION DEVICE
DISPOSITIF A COUTEAUX ROTATIFS

(30) Priorität: 23.03.2016 DE 102016204817
(43) Veröffentlichungstag der Anmeldung: 27.09.2017
(73) Patentinhaber: Albrecht Bäumer GmbH & Co. KG Spezialmaschinenfabrik, 57258 Freudenberg (DE)
(72) Erfinder: Bendel, Andreas, 57258 Freudenberg (DE)
(74) Vertreter: Grosse, Wolf-Dietrich Rüdiger

(56) Entgegenhaltungen:
- DE-A1- 2 936 085
- DE-A1- 3 047 606

## Beschreibung

Die Erfindung betrifft eine Messerdreheinrichtung für ein endloses, in sich geschlossenes, bandförmiges Schneid- oder Sägeelement, ein sogenanntes Bandmesser, mit einer in einem geschlitzten feststehenden Lagergehäuse angeordneten Lagervorrichtung die eine geschlitzte Hohlwelle eines Messerdrehkopfes drehbar lagert. Derartige Lagervorrichtungen werden bei Konturen- oder Formschneidemaschinen in Messerdreheinrichtungen eingesetzt, die das Bandmesser in Schneidrichtung durch Verdrehen ausrichten.

Bei endlos verschweißten Bandmessern von Konturenschneidemaschinen muss das Bandmesser in die Drehachse der Messerdreheinrichtung für das Schneiden montiert werden. Dies ist nur möglich, wenn beispielsweise das Messer in der Maschine verschweißt wird, oder aber die Messerdreheinrichtung, welches das Messer in Schneidrichtung positioniert, eine Montageöffnung, beispielsweise einen Schlitz, aufweist.

Es ist allgemein bekannt, die Hohlwelle mittels einer Gleitlagerung als einfache Konstruktion innerhalb eines Lagergehäuses drehbar zu halten. Nachteile der Gleitlagerung sind die unterschiedlichen Wärmeausdehnungswerte von Metall und Kunststoff, die Gleitreibung mit einem hohen Stick-Slip-Effekt sowie die Gefahr der Verschmutzung.

Aus der EP 1 122 040 B1 ist eine Formschneidemaschine, insbesondere für Schaumstoff, mit einem Werkstücktisch bekannt, der einen Tischspalt und einen Antrieb für Werkstücke in Längsrichtung über den Tischspalt hinweg aufweist. Mit einem endlosen Schneidelement, beispielsweise einem Bandmesser, das den Tischspalt durchsetzt, über Radscheiben gespannt wird und in vertikaler Richtung durch einen Schneidbereich durch Antriebsmittel antreibbar ist, werden die Werkstücke geschnitten. Um mit dem endlosen Bandmesser beliebige Formschnitte ausführen zu können, muss das Bandmesser im Schneidbereich in Schneidrichtung entsprechend der gewünschten Formkurve gedreht werden, und hierzu ist eine Messerdreheinrichtung vorgesehen, die zwei Messerdrehköpfe aufweist. Das Bandmesser wird so durch die Messerdrehköpfe hindurchgeführt, dass die Schneidkante des Messers genau durch die Drehachse der beiden Messerdrehköpfe führt.

Aus der EP 0 738 569 B1 ist eine Vertikalformschneidmaschine mit zwei Messerdreheinrichtungen zum Verdrehen eines Bandmessers bekannt, die mit antreibbaren, geschlitzten Hohlwellen und Messerführungen versehen sind, welche zwei Leitrollen und eine Stützrolle sowie eine Abstreifvorrichtung aufweisen. Durch die Schlitze lässt sich das endlos verschweißte Bandmesser leicht in die Drehachse der Messerdreheinrichtung verbringen. Die Hohlwelle ist in einem Gehäuse gegenüber radialen und axialen Verschiebungen mittels Rollen zur Stützung und Lagerung der Hohlwelle gehalten. Aus der DE 29 36 085 und der DE 30 47 606 sind Lagervorrichtungen mit geschlitzten Lagerscheiben bekannt, die der Vorspannung der Lagerung dienen.

Die Erfindung geht von der Aufgabe aus, eine Lagervorrichtung der eingangs genannten Art derart auszubilden, dass die genannten Nachteile vermieden werden und eine präzise, leichtlaufende Lagerung entsteht.

Die Aufgabe wird erfindungsgemäß für eine Lagervorrichtung der eingangs genannten Art durch die im Patentanspruch 1 angegebenen Merkmale gelöst. Vorteilhafte Ausbildungen sind in den abhängigen Patentansprüchen angegeben.

Die Aufgabe wird erfindungsgemäß dadurch gelöst, dass die Lagervorrichtung wenigstens zwei Lagereinheiten mit jeweils mindestens drei Wälzlagern aufweist, dass zwischen den Lagereinheiten ein geschlitzter Distanzring mittels Befestigungsschrauben positionierbar und gegen Verdrehen gegenüber dem Lagergehäuse sicherbar ist, dass die Wälzlager von Zylinderstiften zwischen zwei geschlitzten C-förmigen Lagerscheiben verdrehsicher gehalten sind, von denen wenigstens zwei Zylinderstifte mit ihrer Länge die Dicke der Lagereinheiten übertreffen, so dass sie über die Oberfläche der Lagereinheiten herausragen, und dass die langen Zylinderstifte in den Distanzring eingreifen. Durch diese Art der Lagerung mittels Wälzlager erhält man eine stabile, äußerst leichtgängige, sehr präzise sowie haltbare Lagervorrichtung.

Die erfindungsgemäße Lagereinrichtung lässt sich bei allen Schneidvorrichtungen, bei denen das Messer gedreht werden muss, z.B. Horizontal- oder Vertikalkonturenschneidemaschinen einsetzen.

Es hat sich als vorteilhaft erwiesen, wenn die Wälzlager Kugellager, insbesondere Schrägkugellager, sind.

Es hat sich bewährt, wenn die Lagereinheiten eine ungerade Anzahl an Wälzlagern, vorzugsweise elf Wälzlager, aufweisen.

Bemerkenswert ist, wenn Passscheiben zwischen den beiden Lagerscheiben und den Wälzlagern angeordnet sind.

Nachahmenswert ist, dass ein Sicherungsring zur Positionierung der Lagereinheiten zum Lagergehäuses und ein Haltering zur Sicherung der drehbaren Hohlwelle vorgesehen sind

Die Erfindung ist nachfolgend anhand von in der Zeichnung dargestellten Ausführungsbeispielen näher erläutert. Es zeigen:
- Figur 1: ein Messerdrehkopf einer Messerdreheinrichtung für endlose bandförmige Schneid- oder Sägeelemente,
- Figur 2: eine Lagervorrichtung für die geschlitzte Hohlwelle in dem geschlitzten Lagergehäuse gemäß Figur 1 und
- Figur 3: eine erfindungsgemäße Lagereinheit gemäß Figur 2.

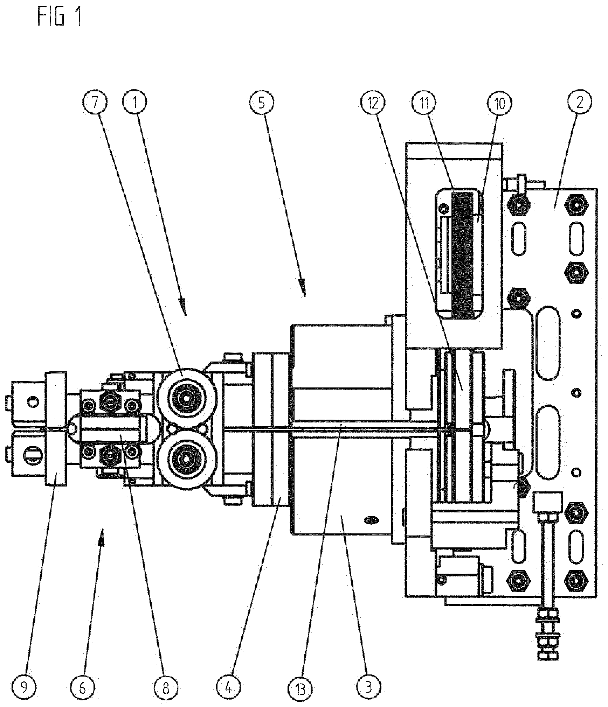

In der Figur 1 ist ein Messerdrehkopf 1 einer Messerdreheinrichtung für ein endlos verschweißtes bandförmiges Schneid- oder Sägeelement, kurz gefasst ein endloses Bandmesser, dargestellt, wie sie beispielsweise bei einer Vertikalformschneidmaschine gemäß der EP 0 738 569 B1 einsetzbar sind. An einem Träger 2 eines Maschinenrahmens ist ein geschlitztes Lagergehäuse 3 verschraubt, in dem eine geschlitzte Hohlwelle 4 drehbar gelagert ist, die zusammen eine Drehvorrichtung 5 bilden. An der Hohlwelle 4 ist eine Messerführung 6 mit zwei Leitrollen 7, wenigstens einer Stützrolle 8 sowie einer Abstreifvorrichtung 9 angebracht. Ein Servomotor 10 verdreht über ein Antriebsritzel 11 und ein Zahnrad 12 die geschlitzte Hohlwelle 4 und damit auch die Messerführung 6 in die gewünschte Schnittrichtung des nicht dargestellten, von der Messerführung 6 gehaltenen Bandmessers. Das Bandmesser wird dabei derart durch die Messerdrehköpfe 1 hindurchgeführt, dass die Schneidkante des Bandmessers genau auf der Drehachse der beiden Messerdrehköpfe 1 liegt.

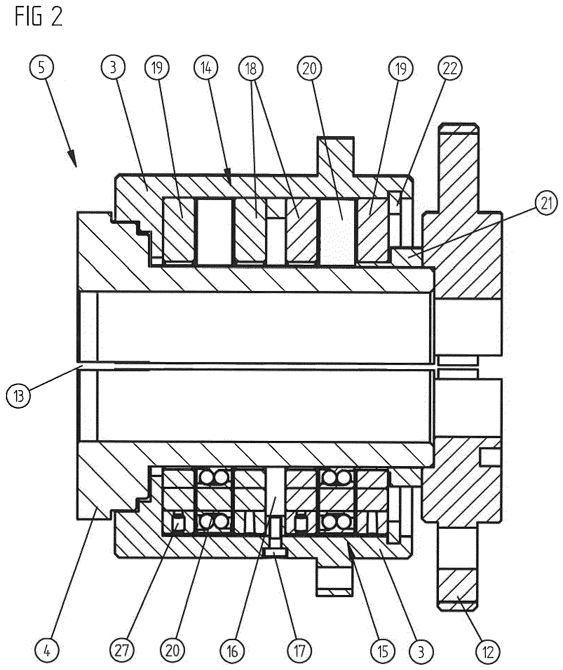

Die Figur 2 zeigt einen Längsschnitt durch die Drehvorrichtung 5 mit dem feststehenden Lagergehäuse 3 und der drehbaren Hohlwelle 4, die jeweils einen Schlitz 13 aufweisen. Diese Schlitze 13 sind in der Grundstellung derart zueinander ausgerichtet, so dass ein in sich geschlossenes Bandmesser von außen durch den Schlitz 13 in das Innere der Hohlwelle 4 einführbar und in die Drehachse der Messerdrehköpfe 1 für das Schneiden montierbar ist.

Das Lagergehäuse 3 und die Hohlwelle 4 sind mittels einer geschlitzten Lagervorrichtung 14 drehbar zueinander gehalten. Die Lagervorrichtung 14 weist zwei Lagereinheiten 15 auf, die durch einen Distanzring 16 auf Abstand gehalten werden. Der Distanzring 16 ist mittels Befestigungsschrauben 17 positioniert und gegen Verdrehen gesichert. Die Lagereinheiten 15 bestehen aus jeweils einer inneren Lagerscheibe 18 und jeweils einer äußeren Lagerscheiben 19, zwischen denen Wälzlager, beispielsweise Schrägkugellager 20, als Lagerelemente angeordnet sind. Die inneren Lagerscheiben 18 sind jeweils dem Distanzring 16 zugewandt. Es ist ein Sicherungsring 22 zur Positionierung des Lagergehäuses 3 zu den Lagereinheiten 15 vorgesehen und ein Haltering 21 dient zur Sicherung der drehbaren Hohlwelle 4.

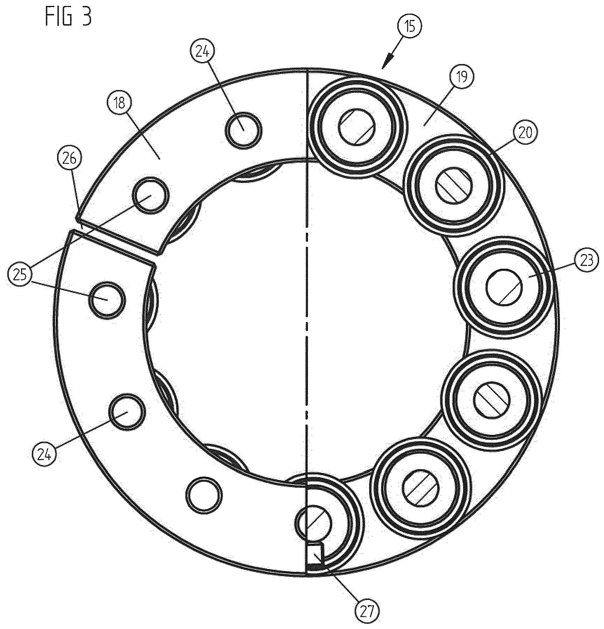

In der Figur 3 ist eine Lagereinheit 15 dargestellt. Die linke Seite der Figur 3 zeigt die Ebene hinter dem Distanzring 16 direkt vor der inneren Lagerscheibe 18 und die rechte Seite die Ebene unmittelbar hinter der inneren Lagerscheibe 18 und vor den Lagerelementen. Zwischen den Lagerscheiben 18 und 19 sind in diesem Beispiel elf Schrägkugellager 20 angeordnet, die beidseitig von Passscheiben 23 umgeben sind. Gehalten werden die Schrägkugellager 20 von Zylinderstiften 24 und wenigstens zwei langen Zylinderstiften 25, die in Bohrungen der Lagerscheiben 18 und 19 eingreifen. Die langen Zylinderstifte 25 ragen aus der inneren Lagerscheibe 18 heraus und greifen als Verdrehsicherung in entsprechende Bohrungen des Distanzringes 16. Dadurch wird sichergestellt, dass die für einen Einbau des Bandmessers erforderlichen Schlitze 26 der C-förmig ausgebildeten Lagerscheiben 18 und 19 sowie des Distanzringes 16 immer aufeinander ausgerichtet sind und nicht gegeneinander verdreht werden können. In der Figur 3 sind die langen Zylinderstifte 25 unmittelbar im Bereich des Schlitzes 26 dargestellt.

Lediglich beim Einbau der Lagereinheiten 15 und Zusammenbau der Messerdrehköpfe 1 ist dafür Sorge zu tragen, dass alle Schlitze 13 und 26 in der Grundstellung fluchten, um ein endloses Bandmesser von außen durch die Schlitze 13 und 26 in das Innere der beiden Messerdrehköpfe 1 einsetzen und in der Drehachse positionieren zu können.

Zur genauen Justierung der Schrägkugellager 20 sind Gewindestifte 27 in den Lagerscheiben 18 und 19 vorgesehen, die nach innen gerichtet auf die Zylinderstifte 24 und 25 einwirken und die Schrägkugellager 20 gegen die innerhalb der Lagereinheiten 15 angeordnete Hohlwelle 4 drücken, so dass sich eine nahezu spielfreie Lagerung der Hohlwelle 4 in dem Lagergehäuse 3 ergibt.

Die Anzahl der Schrägkugellager 20 kann beliebig sein, muss aber mindestens drei betragen. Elf Schrägkugellager 20 erscheinen im Hinblick auf Stabilität und Haltbarkeit jedoch sinnvoll und nicht überdimensioniert. Dabei hat eine derartige größere Anzahl von Schrägkugellagern 20 den Vorteil, dass ein Überrollen des Schlitzes 13 der Hohlwelle 4 ruckfrei erfolgt.

Zusammenfassend ist festzustellen, dass durch den vorliegenden erfindungsgemäßen Gegenstand ein Messerdrehkopf 1 einer Messerdreheinrichtung in geschlitzter Ausführung für endlos verschweißte Bandmesser von Konturenmaschinen mittels einer geschlitzten Lagervorrichtung 14 mit Schrägkugellagern 20 ermöglicht wird.

Die Messerdreheinrichtung besteht aus einem feststehenden, geschlitzten Lagergehäuse, welches im Maschinenrahmen verschraubt wird und zur Aufnahme der gesamten Messerdreheinrichtung dient. In dem Lagergehäuse ist eine drehbar gelagerte und geschlitzte Innenwelle, die Hohlwelle 4, vorgesehen, welche mittels des auf das Zahnrad 12 wirkenden Servomotor 10 verdreht werden kann und somit die Messerführung 6 entsprechend der Schneidrichtung positioniert. Die speziell konstruierte, geschlitzte Lagervorrichtung 14 ist stabil, äußerst leichtgängig, sehr präzise sowie haltbar. Der ebenfalls geschlitzte Distanzring 16 wird mit zwei Befestigungsschrauben 17 positioniert und gegen Verdrehen gesichert. Er hält die beiden Lagereinheiten 15 auf Abstand und sichert die beiden inneren Lagerscheibe 18 über zusätzlich integrierte Zylinderstifte 25 gegen Verdrehen.

Die beiden Lagereinheiten 3 bestehen aus einer äußeren geschlitzten Lagerscheibe 19 zur Aufnahme der Zylinderstifte 25 und 26, einer inneren geschlitzten Lagerscheibe 18, die als Deckel der Lagereinheit dient, elf Schrägkugellagern mit Passscheiben, die den Abstand zwischen den beiden Lagerscheiben18 und 19 und den Schrägkugellagern 20 sicherstellen. Die Abstützung erfolgt auf dem Innenring der Schrägkugellager 20, die dadurch zusätzlich das Verdrehen der Innenringe der Schrägkugellager 20 verhindern. Weiterhin sind Zylinderstifte 24, in der Breite der Lagereinheiten 3 entsprechenden Länge und zwei Zylinderstifte 25 vorgesehen, welche bewusst einseitig aus den Lagereinheiten 3 herausschauen und zusammen mit dem Distanzring 16 der Verdrehsicherung dienen.

### Bezugszeichenliste

- 1: Messerdrehkopf
- 2: Träger
- 3: Lagergehäuse
- 4: Hohlwelle
- 5: Drehvorrichtung
- 6: Messerführung
- 7: Leitrollen
- 8: Stützrolle
- 9: Abstreifvorrichtung
- 10: Servomotor
- 11: Antriebsritzel
- 12: Zahnrad
- 13: Schlitz
- 14: Lagervorrichtung
- 15: Lagereinheiten
- 16: Distanzring
- 17: Befestigungsschrauben
- 18: innere Lagerscheibe
- 19: äußere Lagerscheibe
- 20: Schrägkugellager
- 22: Sicherungsring
- 21: Haltering
- 23: Passscheiben
- 24: Zylinderstifte
- 25: lange Zylinderstifte
- 26: Schlitz
- 27: Gewindestifte

## Patentansprüche

1. Messerdreheinrichtung für ein endloses, in sich geschlossenes, bandförmiges Schneid- oder Sägeelement mit einer in einem geschlitzten feststehenden Lagergehäuse (3) angeordneten Lagervorrichtung (14) die eine geschlitzte Hohlwelle (4) eines Messerdrehkopfes (1) drehbar lagert,
**dadurch gekennzeichnet,**
**dass** die Lagervorrichtung (14) wenigstens zwei Lagereinheiten (15) mit jeweils mindestens drei Wälzlagern (20) aufweist,
**dass** zwischen den Lagereinheiten (15) ein geschlitzter Distanzring (16) mittels Befestigungsschrauben (17) positioniert und gegen Verdrehen gegenüber dem Lagergehäuse (3) gesichert ist, dass die Wälzlager (20) von Zylinderstiften (24 und 25), zwischen zwei geschlitzten C-förmigen Lagerscheiben (18 und 19) verdrehsicher gehalten sind, von denen wenigstens zwei Zylinderstifte (25) mit ihrer Länge die Dicke der Lagereinheiten (15) übertreffen, so dass sie über die Oberfläche der Lagereinheiten (15) herausragen, und
**dass** die langen Zylinderstifte (25) in den Distanzring (16) eingreifen.

2. Messerdreheinrichtung nach Anspruch 1,
**dadurch gekennzeichnet,**
**dass** die Wälzlager Kugellager, insbesondere Schrägkugellager (20), sind.

3. Messerdreheinrichtung nach Anspruch 1 oder 2,
**dadurch gekennzeichnet,**
**dass** die Lagereinheiten (15) eine ungerade Anzahl an Wälzlagern (20), vorzugsweise elf Wälzlager (20), aufweisen.

4. Messerdreheinrichtung nach einem der Ansprüche 1 bis 3,
**dadurch gekennzeichnet,**
**dass** Passscheiben (23) zwischen den beiden Lagerscheiben (18 und 19) und den Wälzlagern (20) angeordnet sind.

5. Messerdreheinrichtung nach einem der Ansprüche 1 bis 4,
**dadurch gekennzeichnet,**
**dass** ein Sicherungsring (22) zur Positionierung der Lagereinheiten (15) zum Lagergehäuses (3) und ein Haltering (21) zur Sicherung der drehbaren Hohlwelle (4) vorgesehen sind.

## Claims

1. A blade rotating device for an endless, closed-loop, band-shaped cutting or sawing element with a bearing device (14) which is arranged in a slotted fixed bearing housing (3) and rotatably supports a slotted hollow shaft (4) of a blade rotary head (1),
**characterized in**
**that** the bearing device (14) has at least two bearing units (15) each of which comprises at least three rolling bearings (20),
**that** a slotted spacer ring (16) is positioned between the bearing units (15) and is secured against rotation relative to the bearing housing (3) by means of fastening screws (17),
**that** the rolling bearings (20) are held in a non-rotatable manner between two slotted C-shaped bearing discs (18 and 19) by means of cylindrical pins (24 and 25) of which at least two cylindrical pins (25) exceed the thickness of the bearing units (15) with their length, so that they project beyond the surface of the bearing units (15), and
**that** the long cylindrical pins (25) engage in the spacer ring (16).

2. The blade rotating device according to claim 1,
**characterized in**
**that** the rolling bearings are ball bearings, in particular angular ball bearings (20).

3. The blade rotating device according to claim 2,
**characterized in**
**that** the bearing units (15) have an odd number of rolling bearings (20), preferably eleven rolling bearings (20).

4. The blade rotating device according to any one of claims 1 to 3,
**characterized in**
**that** adjusting washers (23) are arranged between the two bearing discs (18 and 19) and the rolling bearings (20).

5. The blade rotating device according to any one of claims 1 to 4, **characterized in**
**that** a circlip (22) is provided for positioning the bearing units (15) with respect to the bearing housing (3) and a retaining ring (21) is provided for securing the rotatable hollow shaft (4).

## Revendications

1. Dispositif de rotation de couteaux pour un élément de coupe ou de scie en forme de bande, fermé en soi, sans fin, comprenant un dispositif de palier (14) disposé dans un logement de palier (3) fixe fendu, qui supporte en rotation un arbre creux (4) fendu d'une tête de rotation de couteaux (1),
**caractérisé en ce que**
le dispositif de palier (14) présente au moins deux unités de palier (15) avec respectivement au moins trois paliers à roulement (20),
qu'une bague d'écartement (16) fendue est positionnée entre les unités de palier (15) au moyen de vis de fixation (17) et est bloquée contre la rotation par rapport au logement de palier (3),
que les paliers à roulement (20) sont maintenus bloqués contre la rotation entre deux disques de palier (18 et 19) en forme de C fendus, par des tiges de cylindre (24 et 25), desquelles au moins deux tiges de cylindre (25) dépassent par leur longueur l'épaisseur des unités de palier (15), de sorte qu'elles font saillie au-dessus de la surface des unités de palier (15), et
que les tiges de cylindre (25) longues se mettent en prise dans la bague d'écartement (16).

2. Dispositif de rotation de couteaux selon la revendication 1, **caractérisé en ce que** les paliers à roulement sont des paliers à billes, en particulier des paliers à billes obliques (20).

3. Dispositif de rotation de couteaux selon la revendication 1 ou 2, **caractérisé en ce que** les unités de palier (15) présentent un nombre impair de paliers à roulement (20), de préférence onze paliers à roulement (20).

4. Dispositif de rotation de couteaux selon l'une des revendications 1 à 3, **caractérisé en ce que** des disques ajustés (23) sont disposés entre les deux disques de palier (18 et 19) et les paliers à roulement (20).

5. Dispositif de rotation de couteaux selon l'une des revendications 1 à 4, **caractérisé en ce qu'**une bague de sûreté (22) pour positionner les unités de palier (15) par rapport au logement de palier (3) et une bague de fixation (21) pour fixer l'arbre creux (4) rotatif sont prévues.
